# EUROPEAN PATENT APPLICATION

(11) **EP 4 561 244 A1**
(43) Date of publication of application: **28.05.2025**
(21) Application number: 22951470.8
(22) Date of filing: 19.07.2022
(51) Int. Cl.: H04W 74/04

(54) **INFORMATION TRANSMISSION METHOD AND APPARATUS, AND TERMINAL, NETWORK-SIDE DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/106589
(87) International publication number: WO 2024/016192

(57) **Abstract**

An information transmission method and apparatus, and a terminal, a network-side device and a storage medium, wherein the information transmission method is applied to a first terminal, and the first terminal establishes a direct link and an indirect link with a network-side device, the direct link being a link in which the first terminal is directly connected to the network-side device, and the indirect link being a link in which the first terminal is indirectly connected to the network-side device by means of a second terminal. The method comprises: determining that a link failure occurs in one of a direct link and an indirect link; and reporting link failure information to a network-side device, wherein the link failure information is used for indicating that the link failure occurs in the direct link or the indirect link, which are of a first terminal.

## Description

### FIELD

The present disclosure relates to the field of communication, and in particular to a method and an apparatus for transmitting information, a terminal, a network device and a storage medium.

### BACKGROUND

With the development of wireless communication technology, a user equipment (UE) may be directly connected to a network device to achieve the communication with the network device, or may be connected to the network device via relay of another user equipment without being directly connected to the network device, to achieve the communication with the network device. A direct connection between the user equipment and the network device is referred to as a direct link, and a connection between the user equipment and the network device via another user equipment is referred to as an indirect link.

In the related art, in a case that the user equipment is connected to the network device via both the direct link and the indirect link, and a link failure occurs in a certain link of the user equipment, the network device may not know the link in which the link failure occurs, thereby causing a delay of data transmission in the failed link.

### SUMMARY

In order to overcome the problems existing in the related art, the present disclosure provides a method and an apparatus for transmitting information, a terminal, a network device and a storage medium.

According to a first aspect of embodiments of the present disclosure, there is provided a method for transmitting information, performed by a first terminal, in which the first terminal establishes a direct link and an indirect link with a network device, the direct link is a link where the first terminal is directly connected to the network device, and the indirect link is a link where the first terminal is indirectly connected to the network device via a second terminal. The method includes:
determining that a link failure occurs in one of the direct link and the indirect link; and
reporting link failure information to the network device, in which the link failure information is configured to indicate that the link failure occurs in the direct link or the indirect link of the first terminal.

According to a second aspect of embodiments of the present disclosure, there is provided a method for transmitting information, performed by a network device, in which the network device establishes a direct link and an indirect link with a first terminal, the direct link is a link where the first terminal is directly connected to the network device, and the indirect link is a link where the first terminal is indirectly connected to the network device via a second terminal. The method includes:
receiving link failure information reported by the first terminal, in which the link failure information is configured to indicate that a link failure occurs in the direct link or the indirect link of the first terminal.

According to a third aspect of embodiments of the present disclosure, there is provided an apparatus for transmitting information, applied to a first terminal, in which the first terminal establishes a direct link and an indirect link with a network device, the direct link is a link where the first terminal is directly connected to the network device, and the indirect link is a link where the first terminal is indirectly connected to the network device via a second terminal The apparatus includes:
a first determining module configured to determine that a link failure occurs in one of the direct link and the indirect link; and
a reporting module configured to report link failure information to the network device, in which the link failure information is configured to indicate that the link failure occurs in the direct link or the indirect link of the first terminal.

According to a fourth aspect of embodiments of the present disclosure, there is provided an apparatus for transmitting information, applied to a network device, in which the network device establishes a direct link and an indirect link with a first terminal, the direct link is a link where the first terminal is directly connected to the network device, and the indirect link is a link where the first terminal is indirectly connected to the network device via a second terminal. The apparatus includes:
a first receiving module configured to receive link failure information reported by the first terminal, in which the link failure information is configured to indicate that a link failure occurs in the direct link or the indirect link of the first terminal.

According to a fifth aspect of embodiments of the present disclosure, there is provided a terminal, including:
a first processor; and
a first memory for storing executable instructions by the first processor,
in which the first processor is configured to execute the executable instructions to perform the method for transmitting information according to the first aspect of the present disclosure.

According to a sixth aspect of embodiments of the present disclosure, there is provided a network device, including:
a second processor; and
a second memory for storing executable instructions by the second processor,
in which the second processor is configured to execute the executable instructions to perform the method for transmitting information according to the second aspect of the present disclosure.

According to a seventh aspect of embodiments of the present disclosure, there is provided a non-transitory computer storage medium, storing executable instructions therein, which, when executed by a processor, cause the processor to perform the method for transmitting information according to the first aspect of the present disclosure or the method for transmitting information according to the second aspect of the present disclosure.

In the technical solution provided by the embodiments of the present disclosure, after it is determined that the link failure occurs in one of the direct link and the indirect link of the first terminal, the first terminal reports the link failure information to the network device. Since the link failure information is configured to indicate that the link failure occurs in the direct link or the indirect link of the first terminal, the network device may know in time that the link failure occurs in one of the direct link and the indirect link of the first terminal, such that the network device may resume the failed link in time, thereby reducing a delay of data transmission in the failed link.

It is to be understood that both the foregoing general description and the following detailed description are illustrative and explanatory only, and are not restrictive of the present disclosure.

### BRIEF DESCRIPTION OF THE DRAWINGS

These and other aspects and advantages of embodiments of the present disclosure will become apparent and more readily appreciated from the following descriptions made with reference to the drawings.
FIG. 1 is a schematic diagram illustrating a wireless communication system with a method for transmitting information according to an illustrative embodiment.
FIG. 2 is a flow chart illustrating a method for transmitting information according to an illustrative embodiment.
FIG. 3 is a flow chart illustrating a method for transmitting information according to an illustrative embodiment.
FIG. 4 is a flow chart illustrating a method for transmitting information according to an illustrative embodiment.
FIG. 5 is a flow chart illustrating a method for transmitting information according to an illustrative embodiment.
FIG. 6 is a flow chart illustrating a method for transmitting information according to an illustrative embodiment.
FIG. 7 is a flow chart illustrating a method for transmitting information according to an illustrative embodiment.
FIG. 8 is a flow chart illustrating a method for transmitting information according to an illustrative embodiment.
FIG. 9 is a flow chart illustrating a method for transmitting information according to an illustrative embodiment.
FIG. 10 is a flow chart illustrating a method for transmitting information according to an illustrative embodiment.
FIG. 11 is a flow chart illustrating a method for transmitting information according to an illustrative embodiment.
FIG. 12 is a flow chart illustrating a method for transmitting information according to an illustrative embodiment.
FIG. 13 is a flow chart illustrating a method for transmitting information according to an illustrative embodiment.
FIG. 14 is a flow chart illustrating a method for transmitting information according to an illustrative embodiment.
FIG. 15 is a flow chart illustrating a method for transmitting information according to an illustrative embodiment.
FIG. 16 is a flow chart illustrating a method for transmitting information according to an illustrative embodiment.
FIG. 17 is a flow chart illustrating a method for transmitting information according to an illustrative embodiment.
FIG. 18 is a flow chart illustrating a method for transmitting information according to an illustrative embodiment.
FIG. 19 is a flow chart illustrating a method for transmitting information according to an illustrative embodiment.
FIG. 20 is a flow chart illustrating a method for transmitting information according to an illustrative embodiment.
FIG. 21 is a flow chart illustrating a method for transmitting information according to an illustrative embodiment.
FIG. 22 is a block diagram illustrating an apparatus for transmitting information according to an illustrative embodiment.
FIG. 23 is a block diagram illustrating a terminal according to an illustrative embodiment.
FIG. 24 is a block diagram illustrating a network device according to an illustrative embodiment.

### DETAILED DESCRIPTION

Reference will now be made in detail to illustrative embodiments, examples of which are illustrated in the accompanying drawings. When the following description refers to the accompanying drawings, the same numbers in different drawings represent the same or similar elements, unless otherwise represented. The implementations set forth in the following description of illustrative embodiments do not represent all implementations consistent with the present disclosure. Instead, they are merely examples of apparatuses and methods consistent with some aspects related to the present disclosure as recited in the appended claims.

It may be seen from the related art that a user equipment (UE) may not be directly connected to a network device, but achieves the communication with the network device via relay of another UE. The UE which is not directly connected to the network device is referred to as a remote UE, the UE providing a relay function is referred to as a relay UE, the remote UE and the relay UE may be communicated via a sidelink, and an indirect connection between the remote UE and the network device via the relay UE is referred to as an indirect link. The remote UE may also be directly connected to the network device to achieve the communication with the network device, and a direct connection between the remote UE and the network device is referred to as a direct link. That is, in the wireless communication, the remote UE may be connected to the network device via both the direct link and the indirect link, thereby achieving the communication with the network device.

In a case that the remote UE is connected to the network device via both the direct link and the indirect link, and the remote UE detects that a link failure occurs in one of the direct link and the indirect link, data transmitted in the link will be affected by the link failure, thus resulting in that the data may not be successfully transmitted. However, the network device may not be able to know the link where the link failure occurs in time, thus resulting in a delay of data transmission in the failed link.

In order to solve the above problems, the present disclosure provides a method and an apparatus for transmitting information, and a storage medium. The present disclosure will be further explained below with reference to the accompanying drawings.

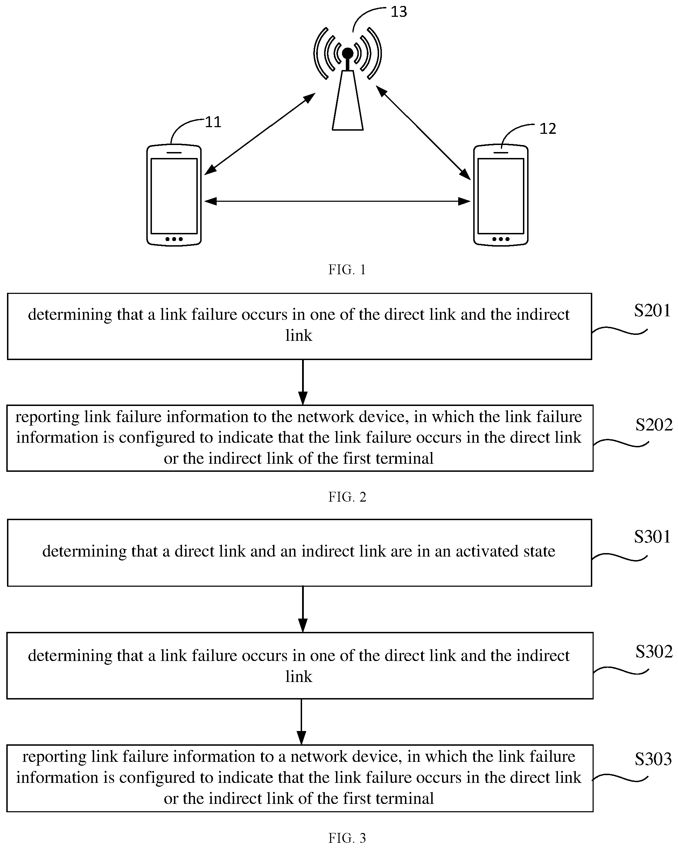

FIG. 1 is a schematic diagram illustrating a wireless communication system according to an illustrative embodiment. As shown in FIG. 1, the wireless communication system includes a first terminal 11, a second terminal 12, and a network device 13. The first terminal 11 and the second terminal 12 may communicate with each other via a PC5 interface and using the sidelink. The network device 13 may communicate with the terminals (including the first terminal 11 and the second terminal 12) via a radio interface (a Uu interface) and using an uplink and a downlink.

The first terminal 11 and the second terminal 12 are UEs or other terminals, for example: a terminal such as a mobile phone, a tablet personal computer, a laptop computer, a personal digital assistant (PDA), a mobile Internet device (MID), a wearable device, a smart automobile, an on-vehicle device or a robot. It should be noted that, in the present disclosure, the specific type of the terminal is not limited.

The network device may be a base station, which is an apparatus deployed in an access network for providing a wireless communication function for the terminal. The base station may be either a base station of a serving cell of the terminal or a base station of a cell adjacent to the serving cell of the terminal. The base station may include various forms, for example, macro base stations, micro base stations, relay stations, access points, transmission reception points (TRPs) and the like. In systems employing different radio access technologies, the names of devices with a base station function may be different, and it is referred to as a gNodeB or a gNB in a 5G new radio (NR) system. As communication technologies evolve, the description of the name "base station" may change. The network device may also be a location management function (LMF) entity.

It should be note that, in the wireless communication system shown in FIG. 1, the first terminal 11 and the second terminal 12 communicate via a sidelink direct link. In other embodiments, the first terminal 11 and the second terminal 12 may also communicate via a sidelink indirect link, i.e., the first terminal 11 and the second terminal 12 communicate via at least one relay terminal.

FIG. 2 is a flow chart illustrating a method for transmitting information according to an illustrative embodiment. The method for transmitting information may be performed by a first terminal, the first terminal establishes a direct link and an indirect link with a network device, the direct link is a link where the first terminal is directly connected to the network device, and the indirect link is a link where the first terminal is indirectly connected to the network device via a second terminal. It should be noted that the first terminal here is a remote UE and the second terminal is a relay UE. As shown in FIG. 2, the method includes the following steps.

In step S201, it is determined that a link failure occurs in one of the direct link and the indirect link.

In step S202, link failure information is reported to the network device, in which the link failure information is configured to indicate that the link failure occurs in the direct link or the indirect link of the first terminal.

In some embodiments, in a case that the link failure occurs in the indirect link, the link failure information may be reported via the direct link, and the link failure information reported here via the direct link is indirect link failure information. In some embodiments, in a case that the link failure occurs in the direct link, the link failure information may be reported via the indirect link, and the link failure information reported here via the indirect link is direct link failure information.

In some embodiments, the link failure information may be carried via an uplink radio resource control (RRC) message.

In this way, the network device may know in time that the link failure occurs in one of the direct link and the indirect link of the first terminal, such that the network device may resume the failed link in time, thereby reducing a delay of data transmission in the failed link.

FIG. 3 is a flow chart illustrating a method for transmitting information according to an illustrative embodiment. As shown in FIG. 3, the method for transmitting information may be performed by a first terminal, and includes the following steps.

In step S301, it is determined that a direct link and an indirect link are in an activated state.

In step S302, it is determined that a link failure occurs in one of the direct link and the indirect link.

In step S303, link failure information is reported to a network device, in which the link failure information is configured to indicate that the link failure occurs in the direct link or the indirect link of the first terminal.

The implementations of steps S302 and S303 may refer to the above relevant embodiments, and will not be repeated here.

It should be noted that, in a case that the direct link and the indirect link are in an inactive state, the direct link and the indirect link cannot perform data transmission. Therefore, the direct link and the indirect link being in the inactive state may be understood as a state similar to the link failure.

Therefore, after it is determined that the direct link and the indirect link are in the activated state, it is determined whether the link failure occurs in one of the direct link and the indirect link, thereby improving the accuracy of detecting the link failure.

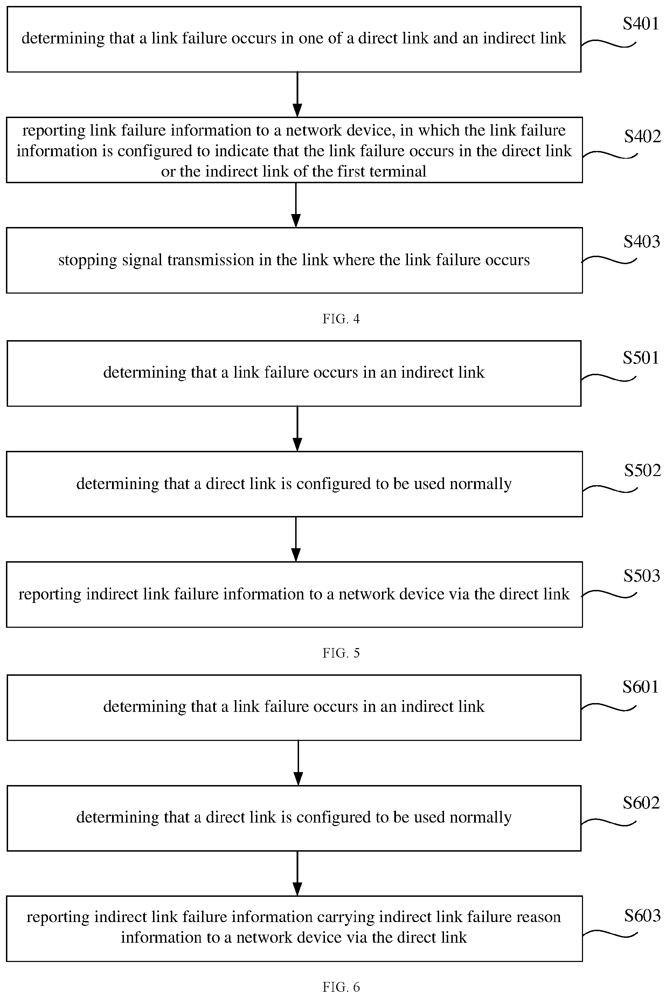

FIG. 4 is a flow chart illustrating a method for transmitting information according to an illustrative embodiment. As shown in FIG. 4, the method for transmitting information may be performed by a first terminal, and includes the following steps.

In step S401, it is determined that a link failure occurs in one of a direct link and an indirect link.

In step S402, link failure information is reported to a network device, in which the link failure information is configured to indicate that the link failure occurs in the direct link or the indirect link of the first terminal.

In step S403, signal transmission in the link where the link failure occurs is stopped.

The implementations of steps S401 and S402 may refer to the above relevant embodiments, and will not be repeated here. Moreover, this embodiment does not limit an order in which step S402 and step S403 are performed. In other embodiments, step S403 may be performed first and then step S402 may be performed.

In some embodiments, in a case that the link failure occurs in a direct link between the first terminal and a second terminal, signal transmission in the direct link is stopped. In some embodiments, in a case that the link failure occurs in an indirect link between the first terminal and the second terminal, signal transmission in the indirect link is stopped.

In this embodiment, in a case that it is determined that the link failure occurs in one of the direct link and the indirect link, the signal transmission in the link where the link failure occurs is stopped, such that resources may be saved and waste of resources may be avoided.

FIG. 5 is a flow chart illustrating a method for transmitting information according to an illustrative embodiment. As shown in FIG. 5, the method for transmitting information may be performed by a first terminal, and includes the following steps.

In step S501, it is determined that a link failure occurs in an indirect link.

In step S502, it is determined that a direct link is configured to be used normally.

In step S503, indirect link failure information is reported to a network device via the direct link.

In this embodiment, the link failure occurring in the indirect link may include at least one of: a radio link failure occurring in a sidelink between the first terminal and a second terminal; a sidelink radio link control (RLC) entity notifying that transmission to a first target terminal reaches a first maximum retransmission number of times; a T400 timer timing out; a sidelink medium access control (MAC) entity notifying that loss feedback of a second target terminal reaches a maximum loss number of times; a sidelink packet data convergence protocol (PDCP) entity notifying that an integrity detection of an sidelink signaling radio bearer 2 (SL-SRB2) fails; a sidelink PDCP entity notifying that an integrity detection of an sidelink signaling radio bearer 3 (SL-SRB3) fails; a continuous listen-before-talk (LBT) failure occurring in a sidelink between the first terminal and the second terminal; a radio link failure occurring to the second terminal; a connection failure occurring to the second terminal; and a PC5-RRC connection between the first terminal and the second terminal being released.

The types of the first target terminal and the second target terminal herein may refer to the above embodiments of the first terminal and the second terminal, and will not be repeated herein.

In this embodiment, corresponding information may be monitored correspondingly to determine whether the link failure occurs in the indirect link between the first terminal and the second terminal according to the above types of the link failure of the indirect link. That is, in this embodiment of the present disclosure, the first terminal may monitor whether the radio link failure occurs in the sidelink between the first terminal and the second terminal; or, the first terminal may monitor whether the sidelink RLC entity notifies that the transmission to the first target terminal reaches the first maximum retransmission number of times; or, the first terminal may monitor whether the T400 timer times out; or, the first terminal may monitor whether the sidelink MAC entity notifies that the loss feedback of the second target terminal reaches the maximum loss number of times; or, the first terminal may monitor whether the sidelink PDCP entity notifies that the integrity detection of the SL-SRB2 fails; or, the first terminal may monitor whether the sidelink PDCP entity notifies that the integrity detection of the SL-SRB3 fails; or, the first terminal may monitor whether the continuous LBT failure occurs in the sidelink between the first terminal and the second terminal; or, the first terminal may monitor whether the radio link failure occurs to the second terminal; or, the first terminal may monitor whether the connection failure occurs to the second terminal; or, the first terminal may monitor whether the PC5-RRC connection between the first terminal and the second terminal is released.

In this embodiment, it is determined that the direct link is configured to be used normally by at least one of: determining that no link failure occurs in the direct link; determining that signal transmission in the direct link is not stopped; and determining that the direct link is activated.

It may be understood that, in order to improve the accuracy of determining that the direct link is configured to be used normally, and to ensure that the first terminal may successfully report the indirect link failure information to the network device, the above methods of determining that the direct link is configured to used normally may be arbitrarily combined, and a plurality of methods of determining that the direct link is configured to used normally may be used to determine that the direct link is configured to used normally. For example, in a case that it is determined that no link failure occurs in the direct link, it is determined that the signal transmission in the direct link is not stopped, and it is determined that the direct link is activated, it is determined that the direct link is configured to be used normally.

In this way, in a case that the link failure occurs in the indirect link of the first terminal and no link failure occurs in the direct link of the first terminal, the direct link may be used to directly report the indirect link failure information to the network device, such that the network device may resume the failed link in time, thereby reducing the delay of data transmission in the failed link.

In some embodiments, the indirect link failure information includes at least one of: indirect link failure reason information; terminal information of a third terminal; and a terminal identifier of the second terminal. The third terminal may be a terminal that may establish an indirect link with the first terminal.

FIG. 6 is a flow chart illustrating a method for transmitting information according to an illustrative embodiment. As shown in FIG. 6, the method for transmitting information may be performed by a first terminal, and includes the following steps.

In step S601, it is determined that a link failure occurs in an indirect link.

In step S602, it is determined that a direct link is configured to be used normally.

In step S603, indirect link failure information carrying indirect link failure reason information is reported to a network device via the direct link.

The implementations of steps S601 and S602 may refer to the above relevant embodiments, and will not be repeated here.

In this way, a reason for the link failure occurring in the indirect link is reported to the network device, and then the network device may make a corresponding operation according to the reason to process the occurred link failure, so as to resume the data transmission as soon as possible, thereby reducing the delay of the data transmission.

It may be seen from the above that indirect link failure has various types, and accordingly, the indirect link failure reason information also has various types. The indirect link failure reason information is illustrated below in combination with the types of the link failure of in the indirect link.

In some embodiments, in a case that the link failure occurring in the indirect link includes a radio link failure occurring in a sidelink between the first terminal and a second terminal, the indirect link failure reason information includes that the radio link failure occurs in the sidelink between the first terminal and the second terminal.

For example, after a unicast connection is established between the first terminal and the second terminal, in a case that the communication quality of the sidelink between the first terminal and the second terminal is not high, which causes a failure in information reception and transmission between the first terminal and the second terminal, and hence results in that the radio link failure occurs in the sidelink between the first terminal and the second terminal, the first terminal reports the indirect link failure information carrying that the radio link failure occurs in the sidelink between the first terminal and the second terminal to the network device, and thus, the network device knows that the radio link failure occurs in the sidelink between the first terminal and the second terminal based on the indirect link failure information, such that the network device may made a corresponding operation to process the occurred radio link failure. For example, the network device may instruct the first terminal to reselect a new relay UE to replace the second terminal. For another example, the network device may instruct the first terminal and the second terminal to re-establish the sidelink, etc.

In some embodiments, the link failure occurring in the indirect link includes that a sidelink RLC entity notifies that transmission to a first target terminal reaches a first maximum retransmission number of times, and the indirect link failure reason information includes that the sidelink RLC entity notifies that the transmission to the first target terminal reaches the first maximum retransmission number of times. The first terminal communicates with the first target terminal via the second terminal.

For example, after the unicast connection is established between the first terminal and the second terminal, in a case that the communication quality of the sidelink between the first terminal and the second terminal is not high, a signal forwarded by the first terminal to the first target terminal via the second terminal may not be successfully forwarded. Moreover, in a case that the signal cannot be successfully forwarded, the first terminal may initiate retransmission, and in a case that the signal cannot be successfully forwarded for a plurality of times, the first terminal will receive a notification from the sidelink RLC entity, which indicates that the transmission to the first target terminal reaches the first maximum retransmission number of times. After receiving the notification, the first terminal reports to the network device the indirect link failure information carrying that the sidelink RLC entity notifies that the transmission to the first target terminal reaches the first maximum retransmission number of times, such that the network device knows that the link failure occurs in the indirect link of the first terminal on the basis of the indirect link failure information, and thus may make a corresponding operation to process the occurred link failure. For example, the network device may instruct the first terminal to reselect the new relay UE to replace the second terminal. For another example, the network device may instruct the first terminal and the second terminal to re-establish the sidelink, etc.

In some embodiments, the link failure occurring in the indirect link includes that a T400 timer times out, and the indirect link failure reason information includes that the T400 timer times out.

For example, after the unicast connection is established between the first terminal and the second terminal, the first terminal may send a RRC reconfiguration sidelink message to the second terminal, in which configuration information for the second terminal is carried, and the configuration information may include a logical channel identifier and the like. After the first terminal sends the RRC reconfiguration sidelink message, the T400 timer is started. In a case that an RRC reconfiguration complete sidelink message or an RRC reconfiguration failure sidelink message replied by the second terminal is received, the T400 timer is stopped. In a case that the T400 timer times out, it may be considered that the link failure occurs in the indirect link between the first terminal and the second terminal, and the first terminal may report the indirect link failure information carrying that the T400 timer times out to the network device. Therefore, the network device knows that the link failure occurs in the indirect link of the first terminal on the basis of the indirect link failure information, and thus may make a corresponding operation to process the occurred link failure. For example, the network device may instruct the first terminal to reselect the new relay UE to replace the second terminal. In an embodiment, in a case that the T400 timer times out, the first terminal may release a PC5-RRC connection and all corresponding sidelink bearers.

In some embodiments, the link failure occurring in the indirect link includes that a sidelink MAC entity notifies that loss feedback of a second target terminal reaches a maximum loss number of times, and the indirect link failure reason information includes that the sidelink MAC entity notifies that the loss feedback of the second target terminal reaches the maximum loss number of times. The first terminal communicates with the second target terminal via the second terminal.

For example, after the unicast connection is established between the first terminal and the second terminal, in a case that the communication quality of the sidelink between the first terminal and the second terminal is not high, a signal that the second terminal forwards feedback made by the first target terminal to the first terminal may not be successfully forwarded. Moreover, in a case that the signal cannot be successfully forwarded, the first terminal may initiate retransmission, and in a case that the signal cannot be successfully forwarded for a plurality of times, the first terminal will receives a notification from the sidelink MAC entity, and the loss feedback of the second target terminal reaches the maximum loss number of times. After receiving the notification, the first terminal reports to the network device the indirect link failure information carrying that the sidelink MAC entity notifies that the loss feedback of the second target terminal reaches the maximum loss number of times. Therefore, the network device knows that the link failure occurs in the indirect link of the first terminal on the basis of the indirect link failure information, and thus may make a corresponding operation to process the occurred link failure. For example, the network device may instruct the first terminal to reselect the new relay UE to replace the second terminal. For another example, the network device may instruct the first terminal and the second terminal to re-establish the sidelink, etc.

In some embodiments, the link failure occurring in the indirect link includes a sidelink PDCP entity notifies that an integrity detection of an SL-SRB2 fails, and the indirect link failure reason information includes that the sidelink PDCP entity notifies that the integrity detection of the SL-SRB2 fails. In some embodiments, the link failure occurring in the indirect link includes that the sidelink PDCP entity notifies that an integrity detection of an SL-SRB3 fails, and the indirect link failure reason information includes that the sidelink PDCP entity notifies that the integrity detection of the SL-SRB3 fails.

Here, in a case that the integrity detection of the SL-SRB2 or the SL-SRB3 of the first terminal fails, a RRC re-establishment process needs to be triggered, that is, indicating that the link failure occurs in the indirect link of the first terminal. In this case, the first terminal sends to the network device the indirect link failure information carrying that the integrity detection of the SL-SRB2 or the SL-SRB3 fails, such that the network device knows that the link failure occurs in the indirect link of the first terminal on the basis of the indirect link failure information, and thus may make a corresponding operation to process the occurred link failure. For example, the network device may instruct the first terminal and the second terminal to re-establish the sidelink.

In some embodiments, the link failure occurring in the indirect link includes that a continuous LBT failure occurs in the sidelink between the first terminal and the second terminal, and the indirect link failure reason information includes that the continuous LBT failure occurs in the sidelink between the first terminal and the second terminal.

It should be noted that the first terminal needs to perform an LBT detection before using a certain frequency band to transmit data, and may only transmit the data after detecting whether a channel is in an idle state. After one LBT failure occurs in the sidelink link between the first terminal and the second terminal, only a current uplink transmission beam may have a LBT problem, and the first terminal may try to switch the transmission beam. Therefore, in order to improve the accuracy of detecting the link failure of the indirect link, in a case that the continuous LBT failure occurs in the sidelink between the first terminal and the second terminal, the indirect link failure information carrying that the continuous LBT failure occurs in the sidelink between the first terminal and the second terminal may be sent to the network device. Therefore, the network device knows that the link failure occurs in the indirect link of the first terminal on the basis of the indirect link failure information, and thus may make a corresponding operation to process the occurred link failure. For example, the network device may instruct the first terminal and the second terminal to re-establish the sidelink.

In some embodiments, the link failure occurring in the indirect link includes that a radio link failure occurs to the second terminal, and the indirect link failure reason information includes that the radio link failure occurs to the second terminal.

It should be noted that, since the second terminal serves as a relay device of the first terminal to perform signal forwarding for the first terminal, in a case that the radio link failure occurs to the second terminal, the second terminal cannot successfully perform the signal forwarding for the first terminal, which results in a delay in data transmission of the first terminal. Based on this, in a case that the radio link failure occurs to the second terminal, the first terminal may send to the network device the indirect link failure information carrying that the radio link failure occurs to the second terminal. Therefore, the network device knows that the radio link failure occurs to the second terminal on the basis of the indirect link failure information, and thus may make a corresponding operation to process the occurred link failure. For example, the network device may instruct the second terminal to re-establish a radio link. Here, the radio link failure of the second terminal may be, for example, that a beam of the second terminal is interfered.

In some embodiments, the link failure occurring in the indirect link includes that a connection failure occurs to the second terminal, and the indirect link failure reason information includes that the connection failure occurs to the second terminal.

It should be noted that the connection failure occurring to the second terminal may, for example, represent that the second terminal rejects a signal forwarding request initiated by the first terminal to the second terminal, or that the signal forwarding request initiated by the first terminal to the second terminal fails. In this way, the second terminal cannot successfully perform the signal forwarding for the first terminal, which results in the delay in the data transmission of the first terminal. Based on this, in a case that the connection failure occurs to the second terminal, the first terminal may send to the network device the indirect link failure information carrying that the connection failure occurs to the second terminal, such that the network device knows that the connection failure occurs to the second terminal on the basis of the indirect link failure information, and thus may make a corresponding operation to process the occurred link failure.

In some embodiments, the link failure occurring in the indirect link includes that a PC5-RRC connection between the first terminal and the second terminal is released, and the indirect link failure reason information includes that the PC5-RRC connection between the first terminal and the second terminal is released.

It may be seen from the above that the first terminal may release the PC5-RRC connection in a case that the T400 timer times out, and after the PC5-RRC connection is released, the signal forwarding cannot be realized. Therefore, in a case that the PC5-RRC connection between the first terminal and the second terminal is released, the first terminal may send to the network device the indirect link failure information carrying that the PC5-RRC connection between the first terminal and the second terminal is released. Therefore, the network device knows that the link failure occurs in the indirect link of the first terminal on the basis of the indirect link failure information, and thus may make a corresponding operation to process the occurred link failure. For example, the network device may instruct the first terminal and the second terminal to resume the PC5-RRC connection therebetween.

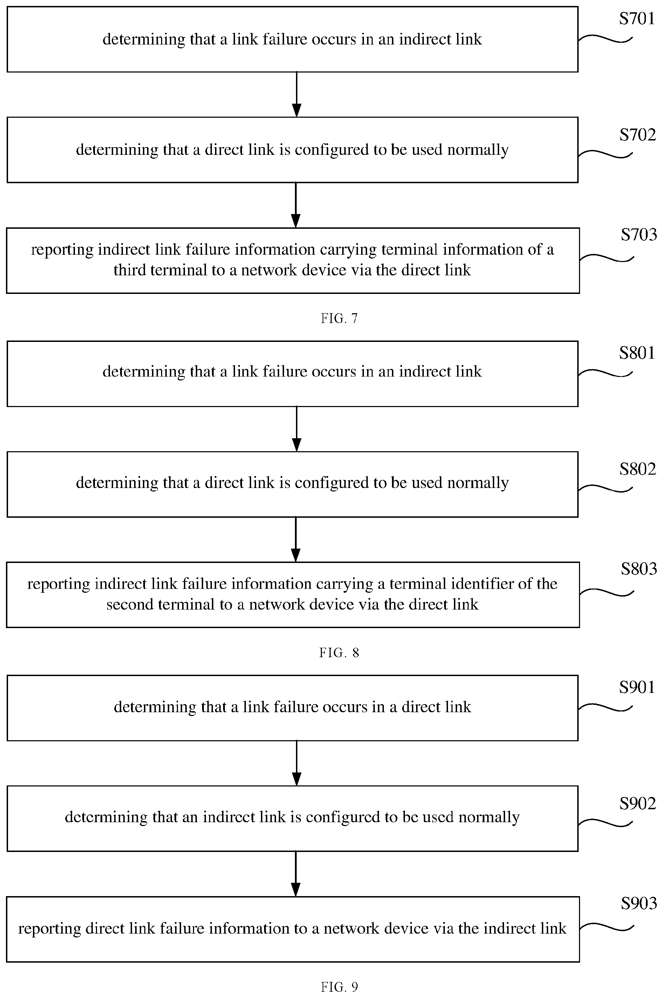

FIG. 7 is a flow chart illustrating a method for transmitting information according to an illustrative embodiment. As shown in FIG. 7, the method for transmitting information may be performed by a first terminal, and includes the following steps.

In step S701, it is determined that a link failure occurs in an indirect link.

In step S702, it is determined that a direct link is configured to be used normally.

In step S703, indirect link failure information carrying terminal information of a third terminal is reported to a network device via the direct link.

The implementations of steps S701 and S702 may refer to the above relevant embodiments, and will not be repeated here.

It should be noted that the types of the third terminal here may refer to the types of the first terminal and the second terminal, and specifically, the third terminal may include at least one of: a relay terminal; a terminal consistent with a serving cell of the first terminal; and a terminal having a sidelink of a wireless channel quality higher than a preset requirement with the first terminal, in which the preset requirement is provided by the network device.

In a case that the third terminal is the relay terminal, the network device may instruct the first terminal to establish a new indirect link with the third terminal in a case that the link failure occurs in the indirect link with the second terminal, and to switch data transmission from the second terminal to the third terminal. In a case that the third terminal is the terminal consistent with the serving cell of the first terminal, or the terminal having the sidelink of the wireless channel quality higher than the preset requirement with the first terminal, the network device may instruct the first terminal to establish the new indirect link with the third terminal in the case that the link failure occurs in the indirect link with the second terminal, to use the newly established indirect link to achieve the data transmission of the first terminal.

In some embodiments, the terminal information of the third terminal may include at least one of a terminal identifier of the third terminal, a wireless channel quality of a sidelink between the first terminal and the third terminal, and a serving cell identifier of the third terminal.

The wireless channel quality here may be represented by a sidelink discovery -reference signal receiving power (SD-RSRP) or a sidelink-RSRP (SL-RSRP). The SD-RSRP is an RSRP of a sidelink discovery signal, and the SL-RSRP is an RSRP of a sidelink communication signal. The measurement of the SD-RSRP does not require establish a unicast connection between UEs, while the measurement of the SL-RSRP requires to establish the unicast connection between UEs.

In this manner, in a case that the link failure occurs in the indirect link of the first terminal, the terminal information of the third terminal is reported to the network device, and then the network device may process the occurred link failure according to the terminal information of the third terminal, and resume the data transmission of the first terminal as soon as possible, thereby reducing the delay of the data transmission.

FIG. 8 is a flow chart illustrating a method for transmitting information according to an illustrative embodiment. As shown in FIG. 8, the method for transmitting information may be performed by a first terminal, and includes the following steps.

In step S801, it is determined that a link failure occurs in an indirect link.

In step SS02, it is determined that a direct link is configured to be used normally.

In step SS03, indirect link failure information carrying a terminal identifier of a second terminal is reported to a network device via the direct link.

The implementations of steps S801 and S802 may refer to the above relevant embodiments, and will not be repeated here.

In this way, in a case that the link failure occurs in the indirect link of the first terminal, the terminal identifier of the second terminal is reported to the network device, such that the network device may know a terminal where the link failure occurs.

It should be noted that the reported indirect link failure information may also be any combination of indirect link failure reason information, terminal information of a third terminal, and the terminal identifier of the second terminal.

FIG. 9 is a flow chart illustrating a method for transmitting information according to an illustrative embodiment. As shown in FIG. 9, the method for transmitting information may be performed by a first terminal, and includes the following steps.

In step S901, it is determined that a link failure occurs in a direct link.

In step S902, it is determined that an indirect link is configured to be used normally.

In step S903, direct link failure information is reported to a network device via the indirect link.

In this embodiment, it is determined that the indirect link is configured to be used normally by at least one of: determining that no link failure occurs in the indirect link; determining that signal transmission in the indirect link is not stopped; and determining that the indirect link is activated.

It may be understood that, in order to improve the accuracy of determining that the indirect link is configured to be used normally, and to ensure that the first terminal may successfully report the indirect link failure information to the network device, the above methods of determining that the indirect link is configured to be used normally may be arbitrarily combined, and a plurality of methods of determining that the indirect link is configured to be used normally may be used to determine that the indirect link is configured to be used normally. For example, in a case that it is determined that no link failure occurs in the indirect link, it is determined that the signal transmission in the indirect link is not stopped, and it is determined that the indirect link is activated, it is determined that the indirect link is configured to be used normally.

In this way, in a case that the link failure occurs in the direct link of the first terminal and the indirect link is configured to be used normally, the direct link failure information is directly reported to the network device via the indirect link, such that the network device may resume the failed link in time, thereby reducing the delay of data transmission in the failed link.

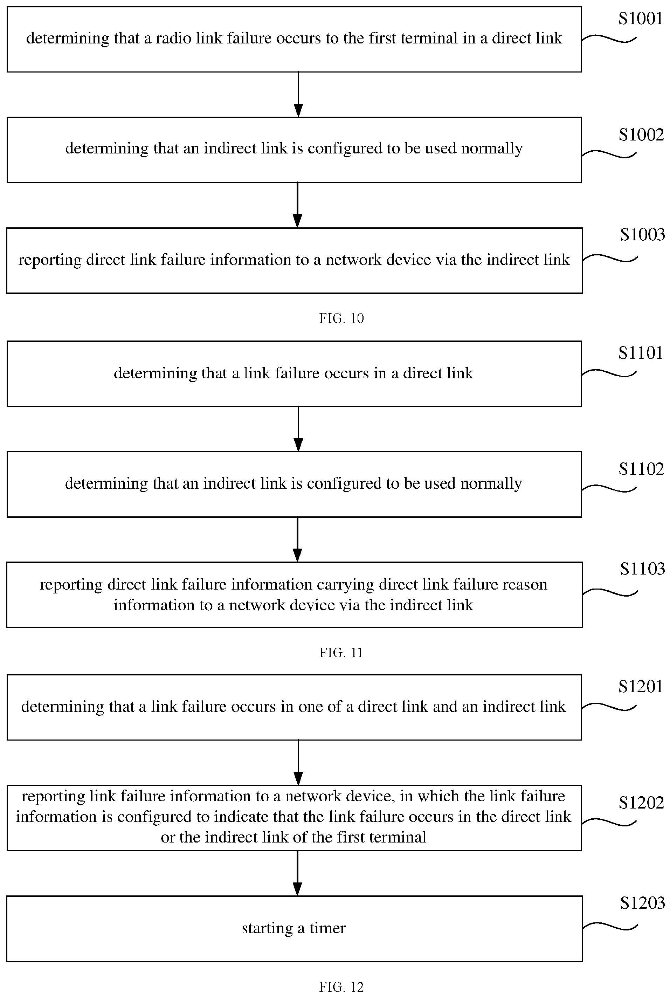

FIG. 10 is a flow chart illustrating a method for transmitting information according to an illustrative embodiment. As shown in FIG. 10, the method for transmitting information may be performed by a first terminal, and includes the following steps.

In step S1001, it is determined that a radio link failure occurs to the first terminal in a direct link.

In step S1002, it is determined that an indirect link is configured to be used normally.

In step S1003, direct link failure information is reported to a network device via the indirect link.

The implementations of steps S1002 and S1003 may be refer to the above relevant embodiments, and will not be repeated here.

In this manner, in a case that the radio link failure occurs in the direct link of the first terminal and the indirect link is configured to be used normally, the direct link failure information is directly reported to the network device via the indirect link, such that the network device may resume the failed link in time, thereby reducing the delay of data transmission in the failed link.

In some embodiments, the radio link failure occurring to the first terminal in the direct link may be caused by at least one of: a T310 timer timing out; a T312 timer timing out; an RLC retransmission reaching a second maximum retransmission number of times; a random access failure; a beam recovery failure; and a continuous LBT failure.

In this embodiment, according to the above types of the radio link failure of the direct link, corresponding information may be correspondingly monitored to determine whether the radio link failure occurs in the direct link. That is, in embodiments of the present disclosure, the first terminal may monitor whether the T310 timer times out; or, the first terminal may monitor whether the T312 timer times out; or, the first terminal may monitor whether the RLC retransmission of the direct link of the first terminal reaches the second maximum retransmission number of times; or, the first terminal may monitor whether a random access of the direct link of the first terminal fails; or, the first terminal may monitor whether a beam recovery of the direct link of the first terminal fails; or, the first terminal may monitor whether the continuous LBT failure occurs in the direct link of the first terminal.

In this way, the first terminal may monitor information that may cause the radio link failure to occur to the first terminal in the direct link, then determine whether the radio link failure occurs to the first terminal in the direct link, and also determine a reason for the radio link failure.

FIG. 11 is a flow chart illustrating a method for transmitting information according to an illustrative embodiment. As shown in FIG. 11, the method for transmitting information may be performed by a first terminal, and includes the following steps.

In step S1101, it is determined that a link failure occurs in a direct link.

In step S1102, it is determined that an indirect link is configured to be used normally.

In step S1103, direct link failure information carrying direct link failure reason information is reported to a network device via the indirect link.

The implementations of steps S1101 and S1102 may refer to the above relevant embodiments, and will not be repeated here.

In this way, the network device may know a reason for the link failure of the direct link of the first terminal according to the direct link failure reason information carried in the direct link failure information sent by the first terminal, such that the network device may use a reasonable processing method according to the reason, so as to resume data transmission as soon as possible, thereby reducing the delay of the data transmission.

The direct link failure reason information is illustrated below in combination with the above types of the link failure of the direct link.

In some embodiments, the link failure occurring in the direct link includes that a radio link failure occurs in the direct link, and the direct link failure reason information includes that the radio link failure occurs in the direct link.

For example, in a case that a beam in the direct link of the first terminal is interfered, the radio link failure occurs in the direct link. In this case, the first terminal reports to the network device the direct link failure information carrying that the radio link failure occurs in the direct link, such that the network device knows the radio link failure occurs in the direct link of the first terminal based on the direct link failure information, and thus the network device may make a corresponding operation to process the occurred radio link failure. For example, the network device may instruct the first terminal to re-establish a beam with the network device.

In some embodiments, the link failure occurring in the direct link includes that a T310 timer times out, and the direct link failure reason information includes that the T310 timer times out.

For example, in a case that the first terminal triggers a start of the timer T310, and the timer T310 times out, the first terminal considers that the radio link failure is detected, and at this moment, reports the direct link failure information carrying that the timer T310 times out, such that the network device knows that the link failure occurs in the direct link of the first terminal based on the direct link failure information, and thus may make a corresponding operation to process the occurred link failure.

In some embodiments, the link failure occurring in the direct link includes that a T312 timer times out, and the direct link failure reason information includes that the T312 timer times out.

For example, in a case that the first terminal triggers a start of the timer T312, and the timer T312 times out, the first terminal considers that the radio link failure is detected, and at this moment, reports the direct link failure information carrying that the timer T312 times out, such that the network device knows that the link failure occurs in the direct link of the first terminal based on the direct link failure information, and thus may make a corresponding operation to process the occurred link failure.

In some embodiments, the link failure occurring in the direct link includes that an RLC retransmission reaches a second maximum retransmission number of times, and the direct link failure reason information includes that the RLC retransmission reaches the second maximum retransmission number of times.

For example, in a case that the communication quality of the direct link between the first terminal and the network device is not high, the first terminal may not successfully send a signal to the network device. In a case that the signal cannot be sent successfully, the first terminal may initiate the RLC retransmission, and in a case that the signal cannot be sent successfully for a plurality of times, i.e. the number of times of initiating the RLC retransmission reaches the second maximum retransmission number of times, it may indicate that the link failure occurs in the direct link. The first terminal may upload to the network device the direct link failure information carrying that the RLC retransmission reaches the second maximum retransmission number of times, such that the network device knows that the link failure occurs in the direct link of the first terminal based on the direct link failure information, and thus may make a corresponding operation to process the occurred link failure.

In some embodiments, the link failure occurring in the direct link includes a random access failure, and the direct link failure reason information includes the random access failure.

The random access refers to an operation that a user sends a random access preamble and starts to try to access the network device before establishing a basic signaling connection with the network device. In a case that the random access fails, it indicates that the first terminal cannot establish the basic signaling connection with the network device for communication. In this case, the first terminal may upload the direct link failure information carrying the random access failure to the network device, such that the network device knows that the link failure occurs in the direct link of the first terminal based on the direct link failure information, and thus may perform a corresponding operation to process the occurred link failure. For example, the random access is re-initiated.

In some embodiments, the link failure occurring in the direct link includes a beam recovery failure, and the direct link failure reason information includes the beam recovery failure.

The first terminal may monitor whether a beam recovery fails, and in a case of failure, it is considered that the link failure occurs in the direct link of the first terminal. In this case, the first terminal may upload the direct link failure information carrying the beam recovery failure to the network device, such that the network device knows that the link failure occurs in the direct link of the first terminal based on the direct link failure information, and thus may make a corresponding operation to process the occurred link failure. For example, the beam recovery is retriggered.

In some embodiments, the link failure occurring in the direct link includes a continuous LBT failure, and the direct link failure reason information includes the continuous LBT failure.

It should be noted that the first terminal needs to perform an LBT detection before using a certain frequency band to transmit data, and may only transmit the data after detecting whether a channel is in an idle state. In a case that the continuous LBT failure occurs, it may be considered that the link failure occurs in the direct link of the first terminal. In this case, the first terminal may upload the direct link failure information carrying the continuous LBT failure to the network device, such that the network device knows that the link failure occurs in the direct link of the first terminal based on the direct link failure information, and thus may make a corresponding operation to process the occurred link failure.

It should be noted that, in a case that the link failure occurring in the direct link has a plurality of types, the reason for the direct link failure has a plurality of types correspondingly, in which the plurality of types may be any combination of the radio link failure, the T310 timer timing out, the T312 timer timing out, the RLC retransmission reaching the second maximum retransmission number of times, the random access failure, the beam recovery failure, and the continuous LBT failure.

FIG. 12 is a flow chart illustrating a method for transmitting information according to an illustrative embodiment. As shown in FIG. 12, the method for transmitting information may be performed by a first terminal, and includes the following steps.

In step S1201, it is determined that a link failure occurs in one of a direct link and an indirect link.

In step S1202, link failure information is reported to a network device, in which the link failure information is configured to indicate that the link failure occurs in the direct link or the indirect link of the first terminal.

In step S1203, a timer is started.

The implementations of step S1201 and step S1202 may refer to the above relevant embodiments, and will not be repeated here.

It should be noted that after the first terminal reports the link failure information to the network device, the network device may actively make a corresponding instruction to the first terminal for resuming data transmission of the first terminal. However, in some cases, the network device may be slow to make the corresponding instruction, which results in a delay of resuming the data transmission of the first terminal, thereby prolonging a duration of service interruption due to the radio link failure. Based on this, the timer may be introduced to monitor whether the network device makes the corresponding instruction within the time specified by the timer.

In this way, in a case that the link failure information is reported to the network device, the timer is started to monitor whether the network device makes the corresponding instruction within the time specified by the timer, such that in a case that the network device cannot make the instruction in time, the first terminal may actively request the network device to resume the data transmission of the first terminal, thus reducing the delay of the data transmission in the failed link of the first terminal.

In some embodiments, the indirect link failure information and the direct link failure information may be carried by the same uplink radio resource control message.

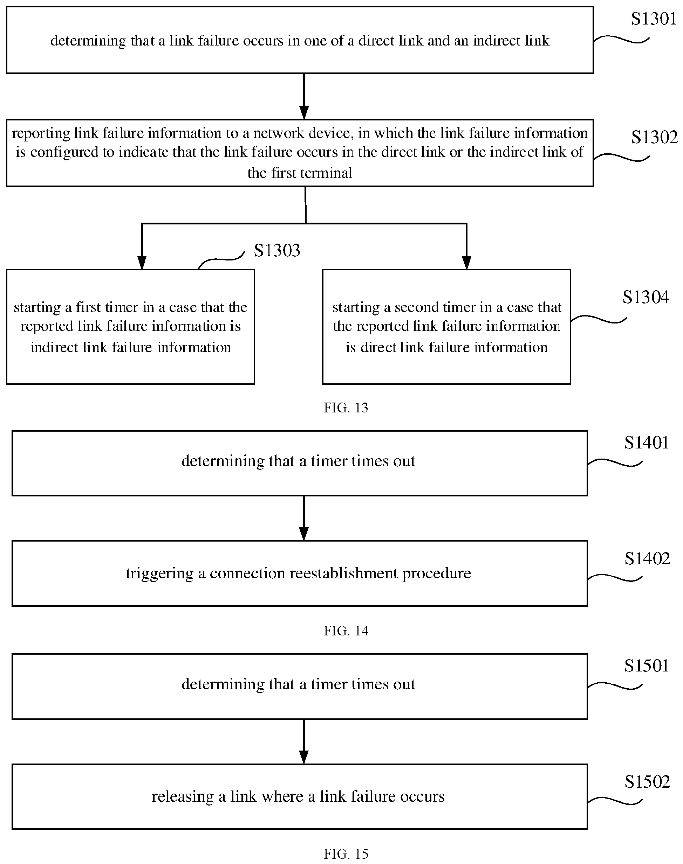

FIG. 13 is a flow chart illustrating a method for transmitting information according to an illustrative embodiment. As shown in FIG. 13, the method for transmitting information may be performed by a first terminal, and includes the following steps.

In step S1301, it is determined that a link failure occurs in one of a direct link and an indirect link.

In step S1302, link failure information is reported to a network device, in which the link failure information is configured to indicate that the link failure occurs in the direct link or the indirect link of the first terminal.

In step S1303, a first timer is started in a case that the reported link failure information is indirect link failure information.

In step S1304, a second timer is started in a case that the reported link failure information is direct link failure information.

It should be noted that, in a case that the link failure occurs in the indirect link, the indirect link failure information may be reported via the direct link; and in a case that the link failure occurs in the direct link, the direct link failure information may be reported via the indirect link. Since times of reporting via the direct link and the indirect link may differ, different timers may be started in a case that the link failure information is reported via different links, so as to start different timers to monitor whether the network device makes a corresponding instruction within the times specified by the timers.

In some embodiments, the first timer and the second timer are timers of the same type, and the timer of the type has different timing durations in different link configurations. It may be seen from the above that since the times of reporting via the direct link and the indirect link may differ, in a case that the types of the started timers are the same, different timing durations need to be configured for different links, so as to monitor whether the network device makes the corresponding instruction within the times specified by the timers using the different timing durations.

FIG. 14 is a flow chart illustrating a method for transmitting information according to an illustrative embodiment. As shown in FIG. 14, the method for transmitting information may be performed by a first terminal, and includes the following steps.

In step S1401, it is determined that a timer times out.

In step S1402, a connection reestablishment procedure is triggered.

Here, after the timer times out, it indicates that the network device still does not actively make a corresponding instruction to the first terminal for resuming the data transmission of the first terminal within the time specified by the timer. In this case, the first terminal may actively trigger the connection reestablishment procedure to reduce a duration of service interruption due to a radio link failure.

FIG. 15 is a flow chart illustrating a method for transmitting information according to an illustrative embodiment. As shown in FIG. 15, the method for transmitting information may be performed by a first terminal, and includes the following steps.

In step S1501, it is determined that a timer times out.

In step S1502, a link where a link failure occurs is released.

Here, after the timer times out, it indicates that the network device still does not actively make a corresponding instruction to the first terminal for resuming the data transmission of the first terminal within the time specified by the timer. In this case, the first terminal may actively release the link where the link failure occurs, and reserve a link where no link failure occurs, so as to resume the data transmission of the first terminal by using the reserved link, thereby reducing a duration of service interruption due to a radio link failure.

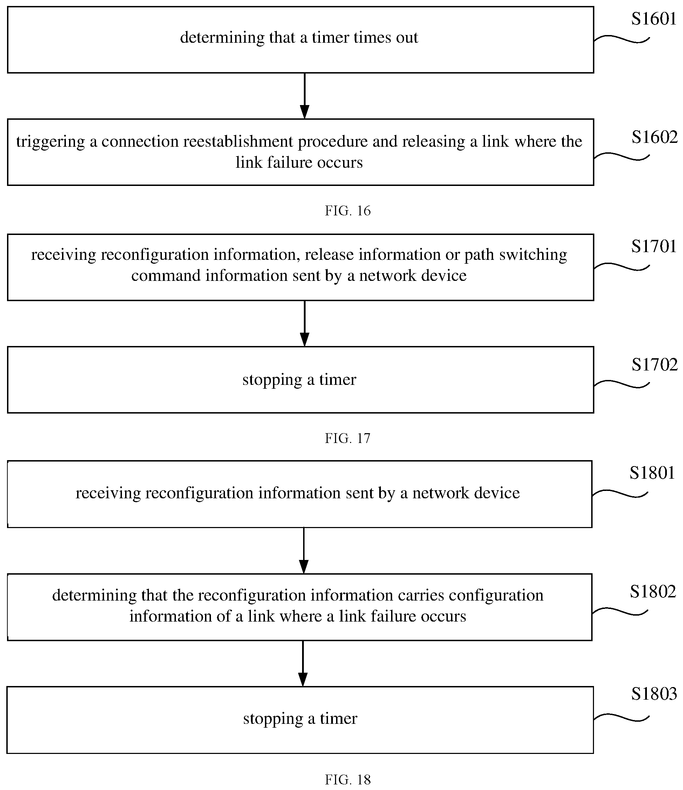

FIG. 16 is a flow chart illustrating a method for transmitting information according to an illustrative embodiment. As shown in FIG. 16, the method for transmitting information may be performed by a first terminal, and includes the following steps.

In step S1601, it is determined that a timer times out.

In step S1602, a connection reestablishment procedure is triggered and a link where a link failure occurs is released.

Here, after the timer times out, it indicates that the network device still does not actively make a corresponding instruction to the first terminal for resuming the data transmission of the first terminal within the time specified by the timer. In this case, the first terminal may actively trigger the connection reestablishment procedure and release the link where the link failure occurs, so as to further improve the speed of resuming the data transmission, thereby further reducing a duration of service interruption due to a radio link failure.

FIG. 17 is a flow chart illustrating a method for transmitting information according to an illustrative embodiment. As shown in FIG. 17, the method for transmitting information may be performed by a first terminal, and includes the following steps.

In step S1701, reconfiguration information, release information or path switching command information sent by a network device is received.

In step S1702, a timer is stopped.

It should be noted that the reconfiguration information, the release information and the path switching command information are all manners for the network device to process a link failure, and the reconfiguration information, the release information or the path switching command information may be configured to resume data transmission of the first terminal.

The reconfiguration information here may, for example, be configured to instruct the first terminal to reselect a relay UE and trigger a connection reestablishment procedure.

The release information here may, for example, be configured to instruct the first terminal to release a link in which a link failure occurs.

The path switching command information herein may, for example, be configured to instruct the first terminal to reselect the relay UE, and may, for example, be also configured to instruct the first terminal to switch signal transmission in an indirect link to a direct link for data transmission in a case that an indirect link failure occurs to the first terminal, and may, for example, be also configured to instruct the first terminal to switch signal transmission in the direct link to the indirect link for data transmission in a case that a direct link failure occurs to the first terminal.

In this way, before the timer times out, in a case that the network device actively sends the reconfiguration information, the release information or the path switching command information to the first terminal, the timer may be stopped to avoid an error monitoring of using the timer to monitor whether the network device makes a corresponding instruction within the time specified by the timer.

FIG. 18 is a flow chart illustrating a method for transmitting information according to an illustrative embodiment. As shown in FIG. 18, the method for transmitting information may be performed by a first terminal, and includes the following steps.

In step S1801, reconfiguration information sent by a network device is received.

In step S1802, it is determined that the reconfiguration information carries configuration information of a link where a link failure occurs.

In step S1803, a timer is stopped.

It should be noted that since the reconfiguration information may also be sent in a case that no link failure occurs, the timer is stopped in a case that it is determined that the reconfiguration information carries the configuration information of the link where the link failure occurs, thereby avoiding ignoring a monitoring, initiated due to the link failure of the first terminal, whether the network device makes a corresponding instruction within the time specified by the timer.

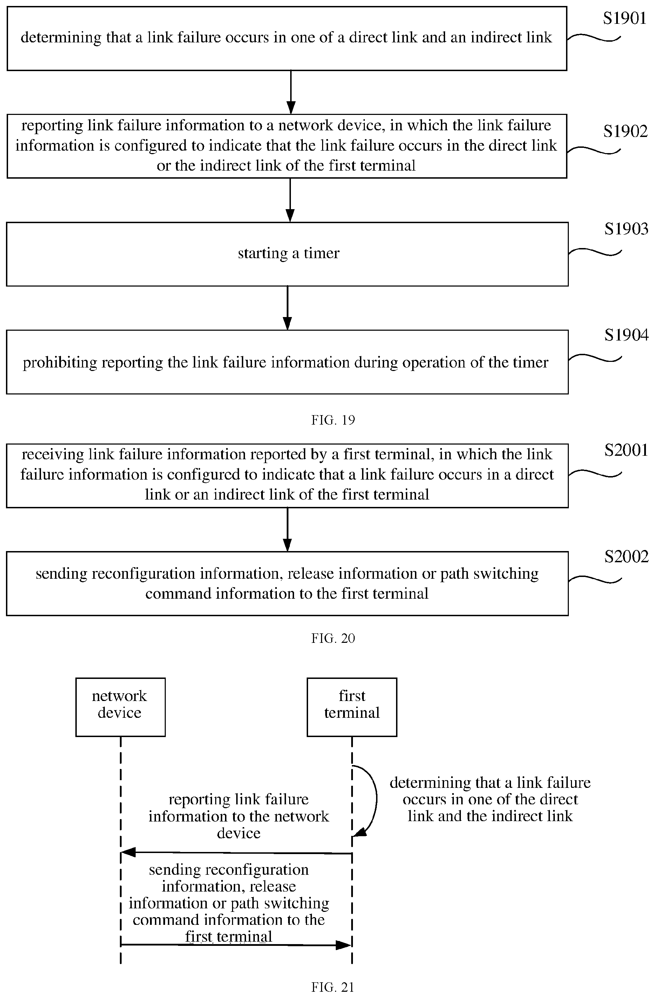

FIG. 19 is a flow chart illustrating a method for transmitting information according to an illustrative embodiment. As shown in FIG. 19, the method for transmitting information may be performed by a first terminal, and includes the following steps.

In step S1901, it is determined that a link failure occurs in one of a direct link and an indirect link.

In step S1902, link failure information is reported to a network device, in which the link failure information is configured to indicate that the link failure occurs in the direct link or the indirect link of the first terminal.

In step S1903, a timer is started.

In step S1904, the link failure information is prohibited from being reported during operation of the timer.

In this way, when the timer is started and during the operation of the timer, the first terminal is prohibited from reporting the link failure information, so as to avoid the first terminal from repeatedly reporting the link failure information, thus saving resources.

Based on the same concept, the present disclosure further provides a method for transmitting information, which is performed by a network device, in which the network device establishes a direct link and an indirect link with a first terminal, the direct link is a link where the first terminal is directly connected to the network device, and the indirect link is a link where the first terminal is indirectly connected to the network device via a second terminal. The method for transmitting information includes: receiving link failure information reported by the first terminal, in which the link failure information is configured to indicate that a link failure occurs in the direct link or the indirect link of the first terminal.

In this way, the network device may know in time that the link failure occurs in one of the direct link and the indirect link of the first terminal, such that the network device may resume the failed link in time, thereby reducing a delay of data transmission in the failed link.

FIG. 20 is a flow chart illustrating a method for transmitting information according to an illustrative embodiment. As shown in FIG. 20, the method includes the following steps.

In step S2001, link failure information reported by a first terminal is received, in which the link failure information is configured to indicate that a link failure occurs in a direct link or an indirect link of the first terminal.

In step S2002, reconfiguration information, release information or path switching command information is sent to the first terminal.

In this way, in a case that the network device receives the link failure information reported by the first terminal to know that the link failure occurs to the first terminal, the network device sends the reconfiguration information, the release information or the path switching command information to the first terminal, such that the first terminal resumes data transmission in time, thereby reducing a delay of data transmission in the failed link.

In some embodiments, the network device may send timer configuration information to the first terminal, and the timer configuration information is configured to notify the first terminal to configure a timer, such that the first terminal starts the timer to monitor whether the network device makes a corresponding instruction within the time specified by the timer after the first terminal reports the link failure information to the network device.

In some embodiments, since times of reporting via the direct link and the indirect link may differ, different timers may be started in a case that the link failure information is reported via different links. Based on this, the timer configuration information is configured to instruct the first terminal to configure a first timer and a second timer, the first timer is configured to start in a case that the reported link failure information represents that the link failure occurs in the indirect link, and the second timer is configured to start in a case that the reported link failure information represents that the link failure occurs in the direct link.

In some embodiments, the first timer and the second timer are timers of the same type, and the timer of the type has different timing durations in different link configurations.

Regarding the embodiments in which the network device serves as an execution subject of the method for transmitting information, the implementations of the respective steps have been described in detail in the embodiments in which the first terminal serves as an execution subject of the method for transmitting information, and will not be described in detail herein.

FIG. 21 is a sequence chart illustrating a method for transmitting information according to an illustrative embodiment. As shown in FIG. 21, after a first terminal determines that a link failure occurs in one of a direct link and an indirect link, the first terminal reports link failure information to a network device. After the network device receives the link failure information, the network device sends reconfiguration information, release information or path switching command information to the first terminal.

In this way, the first terminal may resume data transmission in time, thereby reducing a delay of data transmission in the failed link.

The implementations of the respective steps in FIG. 21 have been described in detail in the above relevant embodiments, and will not be described in detail herein.

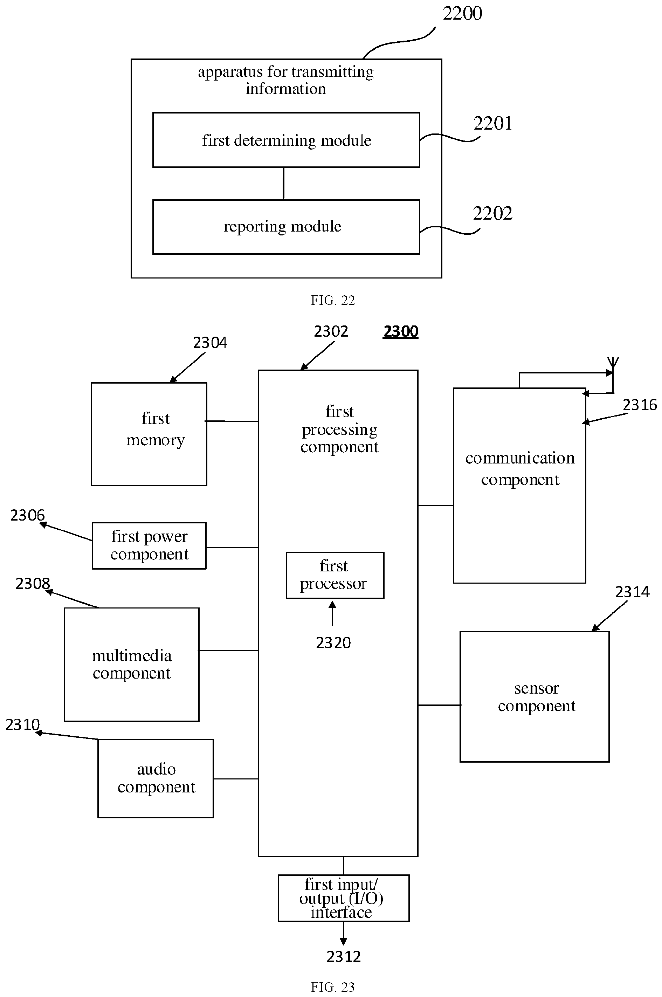

FIG. 22 is a block diagram illustrating an apparatus for transmitting information according to an illustrative embodiment. The apparatus is applied to a first terminal, in which the first terminal establishes a direct link and an indirect link with a network device, the direct link is a link where the first terminal is directly connected to the network device, and the indirect link is a link where the first terminal is indirectly connected to the network device via a second terminal. As shown in FIG. 22, the apparatus 2200 includes:
a first determining module 2201 configured to determine that a link failure occurs in one of the direct link and the indirect link; and
a reporting module 2202 configured to report link failure information to the network device, in which the link failure information is configured to indicate that the link failure occurs in the direct link or the indirect link of the first terminal.

Optionally, the apparatus 2200 further includes:
a second determining module configured to determine that the direct link and the indirect link are in an activated state before determining that the link failure occurs in one of the direct link and the indirect link.

Optionally, the apparatus 2200 further includes:
a first stopping module configured to stop signal transmission in the link where the link failure occurs, in a case that it is determined that the link failure occurs in one of the direct link and the indirect link.

Optionally, the first determining module 2201 includes:
a first determining submodule configured to determine that the link failure occurs in the indirect link; and
a second determining submodule configured to determine that the direct link is configured to used normally.

The uploading module includes:
a first uploading submodule configured to report indirect link failure information to the network device via the direct link.

Optionally, the second determining submodule is configured to determine that the direct link is configured to be used normally by at least one of:
determining that no link failure occurs in the direct link;
determining that signal transmission in the direct link is not stopped; and
determining that the direct link is activated.

Optionally, the link failure occurring in the indirect link includes at least one of:
a radio link failure occurring in a sidelink between the first terminal and the second terminal;
a sidelink RLC entity notifying that transmission to a first target terminal reaches a first maximum retransmission number of times;
a T400 timer timing out;
a sidelink MAC entity notifying that loss feedback of a second target terminal reaches a maximum loss number of times;
a sidelink PDCP entity notifying that an integrity detection of an SL-SRB2 fails;
a sidelink PDCP entity notifying that an integrity detection of an SL-SRB3 fails;
a continuous LBT failure occurring in a sidelink between the first terminal and the second terminal;
a radio link failure occurring to the second terminal;
a connection failure occurring to the second terminal; and
a PC5-RRC connection between the first terminal and the second terminal being released.

The first terminal communicates with the first target terminal and the second target terminal via the second terminal.

Optionally, the indirect link failure information includes at least one of:
indirect link failure reason information;
terminal information of a third terminal, in which the terminal information includes at least one of a terminal identifier, a wireless channel quality of a sidelink between the first terminal and the third terminal, and a serving cell identifier of the third terminal; and
a terminal identifier of the second terminal.

Optionally, the indirect link failure reason information includes at least one of:
the radio link failure occurring in the sidelink between the first terminal and the second terminal;
the sidelink RLC entity notifying that the transmission to the first target terminal reaches the first maximum retransmission number of times;
the T400 timer timing out;
the sidelink MAC entity notifying that the loss feedback of the second target terminal reaches the maximum loss number of times;
the sidelink PDCP entity notifying that the integrity detection of the SL-SRB2 fails;
the sidelink PDCP entity notifying that the integrity detection of the SL-SRB3 fails;
the continuous LBT failure occurring in the sidelink between the first terminal and the second terminal;
the radio link failure occurring to the second terminal;
the connection failure occurring to the second terminal; and
the PC5-RRC connection between the first terminal and the second terminal being released.

Optionally, the third terminal includes at least one of:
a relay terminal;
a terminal consistent with a serving cell of the first terminal; and
a terminal having a sidelink of a wireless channel quality higher than a preset requirement with the first terminal, in which the preset requirement is provided by the network device.

The third terminal is a terminal configured to establish an indirect link with the first terminal.

Optionally, the first determining module 2201 further includes:
a third determining submodule configured to determine that the link failure occurs in the direct link; and
a fourth determining submodule configured to determine that the indirect link is configured to used normally.

The uploading module includes:
a second uploading submodule configured to report direct link failure information to the network device via the indirect link.

Optionally, the fourth determining submodule is configured to determine that the indirect link is configured to be used normally by at least one of:
determining that no link failure occurs in the indirect link;
determining that signal transmission in the indirect link is not stopped; and
determining that the indirect link is activated.

Optionally, the third determining submodule is configured to determine that a radio link failure occurs to the first terminal in the direct link.

Optionally, the direct link failure information includes direct link failure reason information, and the direct link failure reason information includes at least one of:
a radio link failure;
a T310 timer timing out;
a T312 timer timing out;
an RLC retransmission reaching a second maximum retransmission number of times;
a random access failure;
a beam recovery failure; and
a continuous LBT failure.

Optionally, the apparatus 2200 further includes:
a starting module configured to start a timer after reporting the link failure information to the network device.

Optionally, the indirect link failure information and the direct link failure information are carried by the same uplink radio resource control message.

Optionally, the starting module includes:
a first starting submodule configured to start a first timer in a case that the reported link failure information is the indirect link failure information; and
a second starting submodule configured to start a second timer in a case that the reported link failure information is the direct link failure information.

Optionally, the first timer and the second timer are timers of the same type, and the timer of the type has different timing durations in different link configurations.

Optionally, the apparatus 2200 further includes:
a third determining module configured to determine that the timer times out; and
a performing module configured to trigger a connection reestablishment procedure and/or release the link where the link failure occurs.

Optionally, the apparatus 2200 further includes:
a second receiving module configured to receive reconfiguration information, release information or path switching command information sent by the network device; and
a second stopping module configured to stop the timer.

Optionally, the apparatus 2200 further includes:
a fourth determining module configured to, before stopping the timer, determine that the reconfiguration information carries configuration information of the link where the link failure occurs.

Optionally, the apparatus 2200 further includes:
a prohibiting module configured to prohibit reporting the link failure information during operation of the timer. Regarding the apparatus in the above embodiments, the specific manners for individual modules to perform operations have been described in detail in the embodiments regarding the methods, which will not be elaborated herein.

Based on the same inventive concept, embodiments of the present disclosure further provide an apparatus for transmitting information, which is applied to a network device, in which the network device establishes a direct link and an indirect link with a first terminal, the direct link is a link where the first terminal is directly connected to the network device, and the indirect link is a link where the first terminal is indirectly connected to the network device via a second terminal. The apparatus includes:
a first receiving module configured to receive link failure information reported by the first terminal, in which the link failure information is configured to indicate that a link failure occurs in the direct link or the indirect link of the first terminal.

Optionally, the apparatus further includes:
a first sending module configured to send reconfiguration information, release information or path switching command information to the first terminal in a case that the link failure information reported by the first terminal is received.

Optionally, the apparatus further includes:
a second sending module configured to send timer configuration information to the first terminal.

Optionally, the timer configuration information is configured to instruct the first terminal to configure a first timer and a second timer, the first timer is configured to start in a case that the reported link failure information represents that the link failure occurs in the indirect link, and the second timer is configured to start in a case that the reported link failure information represents that the link failure occurs in the direct link.

Optionally, the first timer and the second timer are timers of the same type, and the timer of the type has different timing durations in different link configurations.

Regarding the apparatus in the above embodiments, the specific manners for individual modules to performing operations have been described in detail in the embodiments regarding the methods, which will not be elaborated herein.

Embodiments of the present disclosure further provide a computer-readable storage medium having stored therein computer program instructions that, when executed by a second processor, cause the steps of the method in any method embodiment of the present disclosure to be implemented.

FIG. 23 is a block diagram illustrating a terminal according to an illustrative embodiment. For example, the terminal 2300 may be a user equipment, such as a mobile phone, a computer, a digital broadcast terminal, a messaging device, a game console, a tablet device, a medical device, a fitness device, a personal digital assistant, or the like.

Referring to FIG. 23, the terminal 2300 may include one or more of the following components: a first processing component 2302, a first memory 2304, a first power component 2306, a multimedia component 2308, an audio component 2310, a first input/output (I/O) interface 2312, a sensor component 2314, and a communication component 2316.

The first processing component 2302 typically controls overall operations of the terminal 2300, such as the operations associated with display, phone calls, data communication, camera operations, and recording operations. The first processing component 2302 may include one or more first processors 2320 to execute instructions to perform all or some of the steps in the above methods for transmitting information performed by the user equipment. Moreover, the first processing component 2302 may include one or more modules which facilitate the interaction between the first processing component 2302 and other components. For example, the first processing component 2302 may include a multimedia module to facilitate the interaction between the multimedia component 2308 and the first processing component 2302.

The first memory 2304 is configured to store various types of data to support the operations in the terminal 2300. Examples of such data include instructions for any applications or methods operated on the terminal 2300, contact data, phonebook data, messages, pictures, videos, etc. The first memory 2304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The first power component 2306 provides power to various components of the terminal 2300. The first power component 2306 may include a power management system, one or more power sources, and any other components associated with the generation, management, and distribution of power in the terminal 2300.

The multimedia component 2308 includes a screen providing an output interface between the terminal 2300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touch, slide, and gestures on the touch panel. The touch sensors may not only sense a boundary of a touch or slide action, but also sense a period of time and a pressure associated with the touch or slide action. In some embodiments, the multimedia component 2308 includes a front camera and/or a rear camera. The front camera and/or the rear camera may receive external multimedia data while the terminal 2300 is in an operation mode, such as a photographing mode or a video mode. Each of the front camera and the rear camera may be a fixed optical lens system or have focus and optical zoom capability.

The audio component 2310 is configured to output and/or input audio signals. For example, the audio component 2310 includes a microphone (MIC) configured to receive an external audio signal when the terminal 2300 is in an operation mode, such as a call mode, a recording mode, and a voice recognition mode. The received audio signal may be further stored in the memory 2304 or transmitted via the communication component 2316. In some embodiments, the audio component 2310 further includes a speaker to output audio signals.

The first I/O interface 2312 provides an interface between the first processing component 2302 and peripheral interface modules, such as a keyboard, a click wheel, buttons, and the like. The buttons may include, but are not limited to, a home button, a volume button, a starting button, and a locking button.

The sensor component 2314 includes one or more sensors to provide status assessments of various aspects of the terminal 2300. For example, the sensor component 2314 may detect an on/off status of the terminal 2300, relative positioning of components, e.g., a display and a keypad, of the terminal 2300, a change in position of the terminal 2300 or a component of the terminal 2300, a presence or absence of user contact with the terminal 2300, an orientation or an acceleration/deceleration of the terminal 2300, and a change in temperature of the terminal 2300. The sensor component 2314 may include a proximity sensor configured to detect the presence of nearby objects without any physical contact. The sensor component 2314 may further include a light sensor, such as a CMOS or CCD image sensor, for use in imaging applications. In some embodiments, the sensor component 2314 may further include an acceleration sensor, a gyroscope sensor, a magnetic sensor, a pressure sensor, or a temperature sensor.

The communication component 2316 is configured to facilitate wired or wireless communication between the terminal 2300 and other devices. The terminal 2300 may access a wireless network based on a communication standard, such as Wi-Fi, 2G, or 3G, or a combination thereof. In an illustrative embodiment, the communication component 2316 receives a broadcast signal or broadcast associated information from an external broadcast management system via a broadcast channel. In an illustrative embodiment, the communication component 2316 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 2300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods for transmitting information performed by the user equipment.

In an illustrative embodiment, there is also provided a non-transitory computer readable storage medium including instructions, such as the first memory 2304 including instructions, and the instructions are executable by the first processor 2320 in the terminal 2300, for completing the above methods for transmitting information performed by the user equipment. For example, the non-transitory computer-readable storage medium may be a ROM, a random access memory (RAM), a CD-ROM, a magnetic tape, a floppy disc, an optical data storage device, and the like.

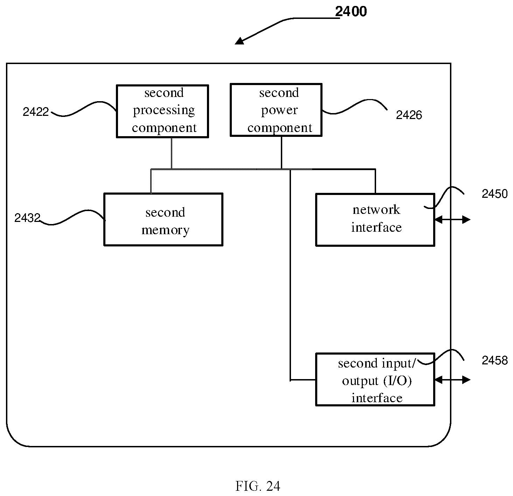

FIG. 24 is a block diagram illustrating a network device according to an illustrative embodiment. For example, the network device 2400 may be provided as a base station. Referring to FIG. 24, the network device 2400 includes: a second processing component 2422, which further includes one or more second processors; and a memory resource represented by a second memory 2432 for storing instructions executable by the second processing component 2422, such as an application program. The application program stored in the second memory 2432 may include one or more modules each corresponding to a set of instructions. In addition, the second processing component 2422 is configured to execute instructions to perform the above methods for transmitting information performed by the network device.

The network device 2400 may also include: a second power component 2426 configured to perform power management of the network device 2400; a wired or wireless network interface 2450 configured to connect the network device 2400 to a network; and a second input/output (I/O) interface 2458. The network device 2400 may operate based on an operating system stored in the second memory 2432, such as Windows Server^{™}, Mac OS X^{™}, Unix^{™}, Linux^{™}, Free BSD^{™} or the like.

In an illustrative embodiment, there is also provided a non-transitory computer-readable storage medium including instructions, such as the second memory 2432 including instructions, and the instructions are executable by the second processor in the network device 2400, for completing the above methods for transmitting information of the network device 2400. For example, the non-transitory computer-readable storage medium may be a ROM, a random access memory (RAM), a CD-ROM, a magnetic tape, a floppy disc, an optical data storage device, and the like.

In another illustrative embodiment, there is also provided a computer program product including a computer program executable by a programmable apparatus, and the computer program has a code portion for executing the method for transmission information performed by the user equipment or the method for transmission information performed by the network device when executed by the programmable apparatus.

Other embodiments of the present disclosure will be apparent to those skilled in the art from consideration of the specification and practice of the present disclosure disclosed here. This application is intended to cover any variations, uses, or adaptations of the present disclosure, which follow the general principles of the present disclosure and include such departures from the present disclosure as come within known or customary practice in the art. It is intended that the specification and examples should be considered as illustrative only, with a true scope and spirit of the present disclosure being indicated by the following claims.

It will be appreciated that the present disclosure is not limited to the exact structure that has been described above and illustrated in the accompanying drawings, and that various modifications and changes may be made without departing from the scope of the present disclosure. It is intended that the scope of the present disclosure only should be limited by the appended claims.

## Claims

1. A method for transmitting information, performed by a first terminal, wherein the first terminal establishes a direct link and an indirect link with a network device, the direct link is a link where the first terminal is directly connected to the network device, and the indirect link is a link where the first terminal is indirectly connected to the network device via a second terminal, wherein the method comprises:
determining that a link failure occurs in one of the direct link and the indirect link; and
reporting link failure information to the network device, wherein the link failure information is configured to indicate that the link failure occurs in the direct link or the indirect link of the first terminal.

2. The method of claim 1, wherein before determining that the link failure occurs in one of the direct link and the indirect link, the method comprises:
determining that the direct link and the indirect link are in an activated state.

3. The method of claim 1, further comprising:
stopping signal transmission in the link where the link failure occurs, in a case that it is determined that the link failure occurs in one of the direct link and the indirect link.

4. The method of claim 1, wherein determining that the link failure occurs in one of the direct link and the indirect link comprises:
determining that the link failure occurs in the indirect link; and
determining that the direct link is configured to be used normally; and
wherein reporting the link failure information to the network device comprises:
reporting indirect link failure information to the network device via the direct link.

5. The method of claim 4, wherein it is determined that the direct link is configured to be used normally by at least one of:
determining that no link failure occurs in the direct link;
determining that signal transmission in the direct link is not stopped; or
determining that the direct link is activated.

6. The method of claim 4, wherein the link failure occurring in the indirect link comprises at least one of:
a radio link failure occurring in a sidelink between the first terminal and the second terminal;
a sidelink radio link control (RLC) entity notifying that transmission reaches a first maximum retransmission number of times;
a T400 timer timing out;
a sidelink medium access control (MAC) entity notifying that loss feedback reaches a maximum loss number of times;
a sidelink packet data convergence protocol (PDCP) entity notifying that an integrity detection of an sidelink signaling radio bearer 2 (SL-SRB2) fails;
a sidelink PDCP entity notifying that an integrity detection of an sidelink signaling radio bearer 3 (SL-SRB3) fails;
a continuous listen-before-talk (LBT) failure occurring in a sidelink between the first terminal and the second terminal;
a radio link failure occurring to the second terminal;
a connection failure occurring to the second terminal; or
a PC5 radio resource control (RRC) connection between the first terminal and the second terminal being released.

7. The method of claim 6, wherein the indirect link failure information comprises at least one of:
indirect link failure reason information;
terminal information of a third terminal, wherein the terminal information comprises at least one of a terminal identifier, a wireless channel quality of a sidelink between the first terminal and the third terminal, or a serving cell identifier of the third terminal; or
a terminal identifier of the second terminal.

8. The method of claim 7, wherein the indirect link failure reason information comprises at least one of:
the radio link failure occurring in the sidelink between the first terminal and the second terminal;
the sidelink RLC entity notifying that the transmission reaches the first maximum retransmission number of times;
the T400 timer timing out;
the sidelink MAC entity notifying that the loss feedback reaches the maximum loss number of times;
the sidelink PDCP entity notifying that the integrity detection of the SL-SRB2 fails;
the sidelink PDCP entity notifying that the integrity detection of the SL-SRB3 fails;
the continuous LBT failure occurring in the sidelink between the first terminal and the second terminal;
the radio link failure occurring to the second terminal;
the connection failure occurring to the second terminal; or
the PC5-RRC connection between the first terminal and the second terminal being released.

9. The method of claim 7, wherein the third terminal comprises at least one of:
a relay terminal;
a terminal consistent with a serving cell of the first terminal; or
a terminal having a sidelink of a wireless channel quality higher than a preset requirement with the first terminal, wherein the preset requirement is provided by the network device,
wherein the third terminal is a terminal configured to establish an indirect link with the first terminal.

10. The method of claim 1, wherein determining that the link failure occurs in one of the direct link and the indirect link comprises:
determining that the link failure occurs in the direct link; and
determining that the indirect link is configured to be used normally; and
wherein reporting the link failure information to the network device comprises:
reporting direct link failure information to the network device via the indirect link.

11. The method of claim 10, wherein it is determined that the indirect link is configured to be used normally by at least one of:
determining that no link failure occurs in the indirect link;
determining that signal transmission in the indirect link is not stopped; or
determining that the indirect link is activated.

12. The method of claim 10, wherein determining that the link failure occurs in the direct link comprises:
determining that a radio link failure occurs to the first terminal in the direct link.

13. The method of claim 10, wherein the direct link failure information comprises direct link failure reason information, and the direct link failure reason information comprises at least one of:
a radio link failure;
a T310 timer timing out;
a T312 timer timing out;
an RLC retransmission reaching a second maximum retransmission number of times;
a random access failure;
a beam recovery failure; or
a continuous LBT failure.

14. The method of claim 4 or 10, wherein after reporting the link failure information to the network device, the method further comprises:
starting a timer.

15. The method of claim 14, wherein the indirect link failure information and direct link failure information are carried by the same uplink radio resource control message.

16. The method of claim 14, wherein starting the timer comprises:
starting a first timer in a case that the reported link failure information is the indirect link failure information; and
starting a second timer in a case that the reported link failure information is the direct link failure information.

17. The method of claim 16, wherein the first timer and the second timer are timers of the same type, and the timer of the type has different timing durations in different link configurations.

18. The method of claim 14, further comprising:
determining that the timer times out; and
triggering a connection reestablishment procedure and/or releasing the link where the link failure occurs.

19. The method of claim 14, further comprising:
receiving reconfiguration information, release information or path switching command information sent by the network device; and
stopping the timer.

20. The method of claim 19, wherein before stopping the timer, the method further comprises:
determining that the reconfiguration information carries configuration information of the link where the link failure occurs.

21. The method of claim 14, further comprising:
prohibiting reporting the link failure information during operation of the timer.

22. A method for transmitting information, performed by a network device, wherein the network device establishes a direct link and an indirect link with a first terminal, the direct link is a link where the first terminal is directly connected to the network device, and the indirect link is a link where the first terminal is indirectly connected to the network device via a second terminal, wherein the method comprises:
receiving link failure information reported by the first terminal, wherein the link failure information is configured to indicate that a link failure occurs in the direct link or the indirect link of the first terminal.

23. The method of claim 22, further comprising:
sending reconfiguration information, release information or path switching command information to the first terminal in a case that the link failure information reported by the first terminal is received.

24. The method of claim 22, further comprising:
sending timer configuration information to the first terminal.

25. The method of claim 22, wherein the timer configuration information is configured to instruct the first terminal to configure a first timer and a second timer, the first timer is configured to start in a case that the reported link failure information represents that the link failure occurs in the indirect link, and the second timer is configured to start in a case that the reported link failure information represents that the link failure occurs in the direct link.

26. The method of claim 25, wherein the first timer and the second timer are timers of the same type, and the timer of the type has different timing durations in different link configurations.

27. An apparatus for transmitting information, applied to a first terminal, wherein the first terminal establishes a direct link and an indirect link with a network device, the direct link is a link where the first terminal is directly connected to the network device, and the indirect link is a link where the first terminal is indirectly connected to the network device via a second terminal, wherein the apparatus comprises:
a first determining module configured to determine that a link failure occurs in one of the direct link and the indirect link; and
a reporting module configured to report link failure information to the network device, wherein the link failure information is configured to indicate that the link failure occurs in the direct link or the indirect link of the first terminal.

28. An apparatus for transmitting information, applied to a network device, wherein the network device establishes a direct link and an indirect link with a first terminal, the direct link is a link where the first terminal is directly connected to the network device, and the indirect link is a link where the first terminal is indirectly connected to the network device via a second terminal, comprising:
a first receiving module configured to receive link failure information reported by the first terminal, wherein the link failure information is configured to indicate that a link failure occurs in the direct link or the indirect link of the first terminal.

29. A terminal, comprising:
a first processor; and
a first memory for storing executable instructions by the first processor,
wherein the first processor is configured to execute the executable instructions to perform a method according to any one of claims 1 to 21.

30. A network device, comprising:
a second processor; and
a second memory for storing executable instructions by the second processor,
wherein the second processor is configured to execute the executable instructions to perform a method according to any one of claims 22 to 26.

31. A non-transitory computer storage medium, storing executable instructions therein, which, when executed by a third processor, cause the third processor to perform a method according to any one of claims 1 to 21, or to perform a method according to any one of claims 22 to 26.
